# EUROPEAN PATENT APPLICATION

(11) **EP 3 866 113 A1**
(43) Date of publication of application: **18.08.2021**
(21) Application number: 20157756.6
(22) Date of filing: 17.02.2020
(51) Int. Cl.: G06T 7/70

(54) **IMAGE SEGMENTATION METHODS AND APPARATUS**

(71) Applicant: Agile Robots AG, 82205 Gilching (DE)
(72) Inventor: Schulte, Patrick, 82205 Gilching (DE); Brucker, Manuel, 82205 Gilching (DE); Büttner, Stefan, 82205 Gilching (DE)
(74) Representative: Keilitz, Wolfgang

(57) **Abstract**

An image processing method and apparatus for segmenting an image to find objects of interest in a scene. An image is subdivided into a mesh of finite elements. A vector is assigned to each finite element. Each vector is anchored in its finite element and has a direction that is initially set to an arbitrary value. A pre-trained neural network is applied to determine directions for the vectors, wherein the neural network has been previously trained to minimise cost in a loss function where cost is minimised when all vectors associated with an object of interest are pointing to a common point lying within a boundary associated with that object. Objects of interest in the image are identified through analysis of the vector directions, since all vectors associated with a particular object will point towards a common centre point, thus also automatically defining the object boundary also.

## Description

### BACKGROUND OF THE INVENTION

The invention relates to computer-implemented segmentation of images using neural networks and related methods and apparatus.

Gonzalez & Woods in their textbook "Digital Image Processing" describe segmentation as image analysis to subdivide an image into constituent parts or objects. The level to which this subdivision is carried out depends on the problem being solved. That is, segmentation should stop when the objects of interest in a particular application have been isolated. Computer-automated segmentation traditionally involves image processing techniques such as the following:
1. Variance based analysis to identify the seed tissue areas
2. Adaptive thresholding
3. Morphological operations (e.g. blob analysis)
4. Contour identification
5. Contour merging based on proximity heuristic rules
6. Calculation of invariant image moments
7. Edge extraction (e.g. Sobel edge detection)
8. Curvature flow filtering
9. Histogram matching to eliminate intensity variations between serial sections
10. Multi-resolution rigid/affine image registration (gradient descent optimiser)
11. Non-rigid deformation/transformation
12. Superpixel clustering

Segmentation can also be performed by neural networks with deep learning, which are being increasingly applied for this purpose. Convolutional neural networks (CNNs), for example, are becoming widely used. An example open source neural network is the VGG architecture from Oxford University available at: http://www.robots.ox.ac.uk/∼vgg/research/very_deep/ which is described in Simonyan and Zisserman 2014 "Very Deep Convolutional Networks for Large-Scale Image Recognition." ArXiv Preprint ArXiv:1409.1556 [1]. The VGG algorithm is available in versions VGG-M and VGG-16.

An important general problem in image processing is cuboid detection in two-dimensional images. For example, this is relevant for picking a box from a collection of boxes in a warehouse, e.g. from a pallet or a storage area, or for building recognition, e.g. from aerial or ground images.

US 2018/0137642 A1 [2] discloses a CNN-based box finding algorithm which employs the Oxford University open source CNN algorithm mentioned above to solve this problem. The CNN is trained with training data comprising a set of images containing cuboids together with ground-truth data. The ground-truth data comprises a bounding box which is a rectangle which contains a cuboid in combination with a mark at the location of each cuboid vertex. The trained CNN is then applied to an image by first defining a bounding box within the image where a cuboid is located and then searching within the bounding box to find the vertex coordinates of the cuboid.

A simplified sub-problem of the general cuboid segmentation problem is sometimes called the tabletop problem. Here the assumption is that the starting image is a two-dimensional (2D) image taken from above of one or more cuboids arranged standing on a flat surface. Solving this problem can be further simplified if in addition to 2D image data also depth data is available that specifies the distance between the camera and each pixel of the 2D image.

Xie, Xiang, Mousavian and Fox arXiv:1907.13236v1 [cs.CV] 30 Jul 2019 in "The Best of Both Modes: Separately Leveraging RGB and Depth for Unseen Object Instance Segmentation" [3] discloses a neural network approach for solving the tabletop problem based on use 2D RGB images with depth data. While the inclusion of depth data is helpful, a depth camera may cost in the region of ten thousand US Dollars, whereas a conventional digital camera may cost only a hundred US Dollars. In any case, if the boxes are all the same size and resting on the same surface, the box lids will all be at the same height, so a depth camera may not provide additional useful information.

### SUMMARY OF THE INVENTION

According to one aspect of the disclosure there is provided an image processing method for segmenting an image to find objects of interest in a scene, the method comprising:
providing a set of image data comprising pixels or voxels representing an image of a scene;
subdividing the image into a mesh of finite elements within which each finite element has at least three neighbouring finite elements with a common line (in 2D) or surface (in 3D);
assigning a vector to each finite element, wherein each vector is anchored in its finite element and has a direction, the direction being assigned an initial value that is arbitrary (e.g. a random direction or all in the same direction);
applying a trained neural network to determine a vector direction for at least a subset of the finite elements, wherein the neural network has been previously trained to minimise cost in a loss function where cost is minimised when all vectors associated with an object of interest are pointing to a common point lying within a boundary associated with that object; and
identifying any objects of interest in the image through analysis of the vector directions.

In certain embodiments, determination of a vector direction is confined to a subset of the finite elements, the subset representing finite elements determined to relate to objects of interest, wherein the neural network has been previously trained also to minimise cost in a further loss function where cost is minimised when finite elements relating to objects of interest and finite elements not relating to objects of interest are assigned different values.

The objects of interest may all be assigned the same value or classified with different values. The background, i.e. not-of-interest finite elements, may all be assigned the same value or be classified with different values, e.g. the background may include multiple surfaces, such as a tabletop surface and floor surface. In its simplest form a binary mask can be used. In some embodiments the same neural network is used both for distinguishing the subset of finite elements relating to objects of interest and also for determining the vector directions. In other embodiments, two independently operating and independently trained neural networks could be used for the background discrimination (i.e. subset determination) and the vector direction determination respectively. In still further embodiments, the background discrimination could be performed with conventional image processing, which can be expected to be quite reliable for this task, since it does not require the boundaries between closely packed objects to be determined. It will then be the case that the neural network is only used for vector direction determination.

Each object of interest identified in the image may be assigned a point and/or a boundary based on the analysis of the vector directions for that object. A significant conceptual aspect of the proposed method is that a boundary identified by the vector directions is not simply an identified geometrical feature but has a known attribution to a particular object. This means the outside and the inside of the boundary is part of the information delivered by the method. For touching objects this can be important, since the image itself may not resolve the existence of two touching boundary portions of adjacent objects, but rather may only show a single edge. An advantage of the proposed method is that it does not involve resolving edges in the image, but rather is based on finding an internal point in each object of interest by pointing vectors towards this point, and the vectors aligned in this way automatically define the boundary of the object as well. By analogy to conventional image processing, the proposed neural network method may be viewed conceptually as somewhat comparable to a blob growing method which automatically finds its own seed point.

The method may further comprise outputting the point of each object identified in the image and/or outputting the boundary of each object identified in the image. The output may depend on the task to be performed based on the segmentation results. For example, if the task is picking a box using a robot arm with a sucker head, then it will be desired to know the location where the sucker should be placed on the box, so the robot will want to receive the centroid point, i.e. the point where the vectors point to. On the other hand, if the task is picking a box from a pallet with a side approach from a driverless forklift truck or from above with a robot arm fitted with a grabber, the truck will want to know where to prod its forks or the grabbing robot will want to know where to grab. In these cases, the boundary data of the item to be picked will be relevant as well as sometimes also the centre point (or other point) determined by the neural network method. In each particular application situation, the coordinates that need to be extracted may be different, and this can be accommodated by use of appropriate training and/or post-processing of the boundary and centre point (or other internal point) data obtained from the neural network.

The scene may be a 2D scene or a 3D scene. The image as represented by the set of image data may be a 2D set of image data, i.e. pixels, of a 2D or 3D scene, or may be a 3D set of image data, i.e. voxels, of a 3D scene. The finite elements may map one-to-one to pixels or voxels in the set of image data, or may have a non-trivial mapping. In some embodiments, the pixels or voxels of the image data have a one-to-one mapping or many-to-one mapping to the finite elements of the mesh. In other embodiments, the pixels or voxels of the image data have a many-to-many mapping to the finite elements of the mesh. For example, most image acquisition modalities will results in a Cartesian distribution of pixels or voxels in a 2D or 3D grid array, so from a geometric point of view a natural choice for the mesh of finite elements would be a square or rectangular mesh in 2D or a corresponding cuboid (including cubic) mesh in 3D. However, in principle other mesh geometries could be used, such as a triangular mesh in 2D or a tetrahedral mesh in 3D.

In some embodiments, the neural network has a set of three input matrices bearing first, second and third scalar attributes of the image data, each input matrix having an array of elements corresponding to the finite elements of the mesh, and a set of three output matrices each bearing corresponding first, second and third attributes, at least two of which are associated with respective scalar values which together indicate a vector direction for the vector. In a CNN implementation, the input matrices will be input as the first convolutional layer and the output matrices will be the output from the last transpose convolution layer. In addition, a third attribute in the output matrices may be associated with a value representing whether an object of interest is associated with that element or not. This value may be a binary value and signify that the associated element is not part of an object of interest, i.e. is background. For example, the first, second and third scalar attributes in the input matrix may represent respective primary colours in the image data. The input matrix may therefore be an RGB input image patch.

The previous training may have been directed to identifying objects of interest that are at least approximately rectangular or cuboid in shape. Example objects of interest include boxes, such as cardboard boxes. A cardboard box will conform closely to a cuboid shape, but not exactly for various reasons. The box may be deformed by its load or through external damage. The lid may have irregular shape due to rough taping. Even a pristine box will not be exactly cuboid, because the edges will always be slightly rounded. A cotton bale is also approximately, but not exactly cuboid, since a cotton bale will have a side bulge as indeed permitted by the U.S. Gin Universal Density Bale standard. Other example objects of interest are cells, such as human or animal cells, that have touching cell membranes, e.g. highly or fully confluent cells as may be found in organs, tumours and cell colonies such as bacterial or animal cell colonies.

The proposed method can be applied to any arbitrary shape but may be of particular merit for images in which the objects of interest are closely packed in a way that makes it important to reliably determine which edge features in an image are associated with which object or objects. Examples of such applications include identifying boxes in a group of boxes that are arranged touching each other, such as is found in a warehouse floor or on a pallet, as well as bales of agricultural produce, and confluent cells in a microscope image. Other applications may be based around stacked groups of filled sacks, e.g. filled with grain, rice, coal, potatoes, flour, cement or chemicals in powder form. Still further applications may be for stackable crates, such as those used for bottles, e.g. stacks of crates of the type configured to accommodate a 6x4 array of bottles. Another application would be for lifting pallets that are arranged side-by-side.

According to another aspect of the disclosure, there is provided a computer apparatus configured to perform segmentation on an image to find objects of interest in a scene, the computer apparatus comprising:
a memory operable to store a set of image data comprising pixels or voxels representing an image of a scene and loaded with instructions embodying a neural network trained to process images of the type stored in the memory;
a processor configured to cooperate with the memory so as to be operable to:
   load an image from the memory; and
   subdivide the image into a mesh of finite elements within which each finite element has at least three neighbouring finite elements with a common line or surface;
assign a vector to each finite element, wherein each vector is anchored in its finite element and has a direction, the direction being assigned an initial value that is arbitrary;
apply the neural network to determine a vector direction for at least a subset of the finite elements, wherein the neural network has been previously trained to minimise cost in a loss function where cost is minimised when all vectors associated with an object of interest are pointing to a common point lying within a boundary associated with that object;
identify any objects of interest in the image through analysis of the vector directions; and
output data relating to the objects of interest.

By previously trained we mean that the neural network is configured with a cost function that has had its parameter values set following the above-mentioned training process, i.e. to set the weights.

According to still further aspect of the disclosure there is provided a method of training a neural network to segment an image to find objects of interest in a scene, the method comprising:
providing a library of training images, each training image comprising a set of image data of pixels or voxels representing an image of a scene;
subdividing the image into a mesh of finite elements within which each finite element has at least three neighbouring finite elements with a common line (in 2D) or surface (in 3D);
supplementing each training image with ground-truth data indicating boundaries (lines in 2D, surfaces in 3D) of any objects of interest in the image and a point within each object of interest, the ground-truth data comprising a vector assigned to each finite element, wherein each vector is anchored in its finite element and is given a direction that points towards the point for that object; and
training the neural network by minimizing a loss function, where cost is minimised when all vectors associated with each ground-truth object in the training image are pointing to the ground-truth point for that object.

Training the neural network may involve adjusting weights in the loss function to provide better alignment between the vectors computed by the loss function and the vectors in the ground-truth data. Moreover, the library of training images may include training images containing multiple objects of interest, some of which have closely adjacent boundary portions. The objects of interest in the scene from which the training images were obtained may be at least approximately rectangular or cuboid in shape.

The points marked in the ground-truth data may be any one of:
- any point within the boundary of an object of interest;
- a geometrical centre point of the object or a rough approximation thereto made by human judgement;
- a centre of gravity point in case the objects of interest have a known weight distribution or a rough approximation thereto made by human judgement;
- a nucleus location when the object is a cell and the boundary is a cell membrane; and
- a target point for projectile impact where the object of interest is a target of a weapon system.

The training data images may be colour images taken with a conventional digital camera in the case that the objects of interest are everyday objects capable of being imaged with such a camera. In the case of cell imaging, the training data images may be images acquired with a digital microscope. The cell images may be pathology images or images of live cells. The cell images may be 2D images or 3D images, e.g. taken by compositing z-stacks.

According to another aspect of the disclosure, there is provided a computer apparatus configured to train a neural network to segment an image to find objects of interest in a scene, the computer apparatus comprising:
a memory in which is stored a library of training images, each training image comprising a set of image data of pixels or voxels representing an image of a scene as well as ground-truth data indicating boundaries of any objects of interest in the image and a point within each object of interest, the ground-truth data comprising a vector assigned to each finite element, wherein each vector is anchored in its finite element and is given a direction that points towards the point for that object; and
a processor configured to cooperate with the memory so as to be operable to:
   load a training image from the memory;
   subdivide the training image into a mesh of finite elements within which each finite element has at least three neighbouring finite elements with a common line or surface; and
   train the neural network by minimizing a loss function, where cost is minimised when all vectors associated with each ground-truth object in the training image are pointing to the ground-truth point for that object.

According to further aspects of the disclosure, there is provided a computer program product bearing non-transitory machine-readable instructions for performing the above methods.

According to a further aspect of the disclosure, there is provided a robotic system comprising the above-defined robot apparatus and camera in combination with the above-defined computer apparatus configured to perform segmentation on an image to find objects of interest in a scene.

### BRIEF DESCRIPTION OF THE DRAWINGS

This invention will now be further described, by way of example only, with reference to the accompanying drawings.
Figure 1 is a schematic side view of a robot apparatus for manipulating a selected box that is one of a group of boxes.
Figure 2 is a schematic plan view of a group of boxes, an image of which can be captured from above by a camera.
Figure 3 shows schematically a digital image as captured by the camera of Figure 1 made up of a 2D array of pixels.
Figure 4 reproduces the raw image of Figure 2 and additionally shows for each box lid a centroid blob and an outline boundary as can be determined by a method according to the disclosure.
Figures 5A and 5B show schematically by corresponding panes of artificially small 5x5 arrays how the concept of pixel vectors is employed according to the disclosure.
Figure 6 shows pixel vectors of a real result superimposed on a real image of a cardboard box.
Figure 7 shows schematically the neural network architecture.
Figure 8 is a flow diagram of the training method.
Figure 9 is a flow diagram of the live method.
Figure 10 is a schematic block diagram showing functional parts of a computer system used to acquire images, process the images, and control a robot to perform a task, such as a picking task of an object identified by the image processing, according to an implementation of the disclosure.
Figure 11 is a block diagram of a tensor processing unit (TPU) which may be used for performing the computations involved in implementing the neural network architecture either for training or in a live system.
Figure 12 is a block diagram of a computing apparatus that may be used for example as the host computer for the TPU of Figure 11 and/or for controlling the robot apparatus of Figure 1.

### DETAILED DESCRIPTION

In the following detailed description, for purposes of explanation and not limitation, specific details are set forth in order to provide a better understanding of the present disclosure. It will be apparent to one skilled in the art that the present disclosure may be practiced in other embodiments that depart from these specific details.

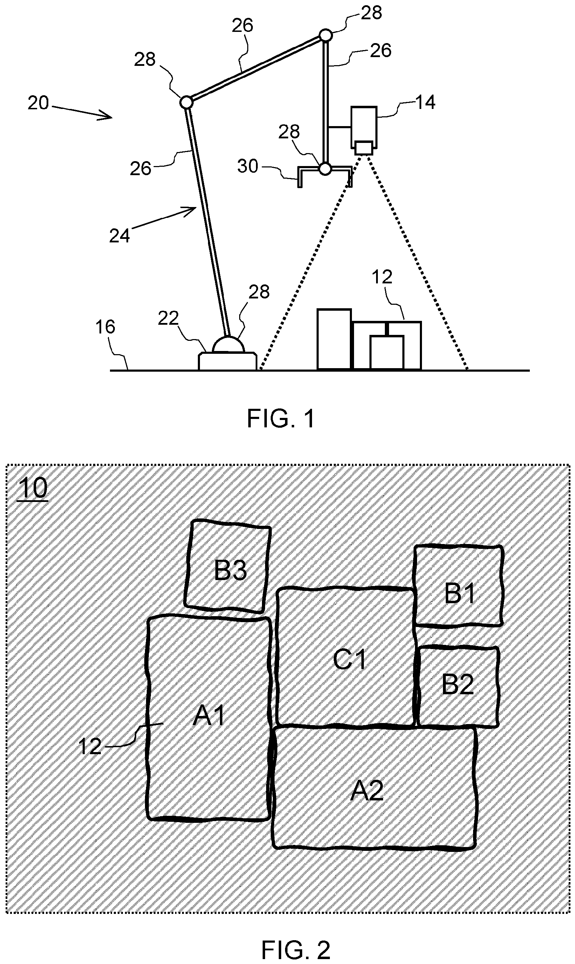

Figures 1 and 2 are schematic side and plan views of the task to be performed in certain embodiments of the disclosure. The specific task discussed is representative of the broader class of tasks that may be performed by applying the methods described herein.

Figure 1 is a schematic side view of a robot apparatus 20 for manipulating individual boxes 12 that form part of a group of boxes. The boxes 12 are at least approximately cuboid in shape, of arbitrary size and standing on a surface 16, e.g. the floor of a warehouse, a tabletop, a pallet or a conveyor belt. The boxes 12 are arranged next to each other in an arbitrary way and their sides may be touching each other or otherwise be in close proximity. Figure 2 shows by way of example six boxes of three different sizes A, B & C, which are labelled A1, A2, B1, B2, B3, C1. The task is to acquire an image of the boxes 12 with a camera 14 and to process the image in order to identify the lids of each box, i.e. their upper surfaces (we refer to the box lids assuming the image is taken from above).

Figure 2 is a schematic plan view of the boxes 12 as well as of an image 10 taken by the camera 14. The outline and/or centre point of each box lid is to be identified from an image taken from above by the camera 14. The boxes 12 are shown in Figure 2 with non-straight edges to schematically indicate that the box faces may not be geometrically perfectly rectangular. In addition, any image captured of the boxes may also be ambiguous as to the boundary information, i.e. there is unlikely to be a sharp binary step in the image at the boundaries.

Referring to Figure 1, the robot apparatus 20 comprises a base unit 22, which may be arranged on the surface 16. The base unit 22 connects to a proximal end of a robot arm 24. The robot arm 24 comprises a plurality of arm portions 26, three being illustrated by way of example, each connected to each other by a joint 28 with further joints 28 connecting the proximal end of the robot arm to the base unit 22 and the distal end of the robot arm 24 to an end effector 30, which is illustrated schematically as a grabber (sometimes called a gripper) by way of example. The joints in a robot arm are conventionally referred to using the human anatomical terms which, from the proximal to distal end of the arm, are: shoulder, elbow and wrist. This nomenclature is suitable for a three-joint robot arm. Similarly, the arm portions in a robot arm are conventionally referred to as the upper arm and lower arm, which again is suitable for a three-joint robot arm.

The camera 14 is illustrated as being mounted at or near the distal end of the robot arm 24, e.g. as schematically illustrated on the most distal arm portion 26 via a strut or other mechanical mounting. The camera 14 may also be movably mounted, e.g. to allow it to pivot relative to the robot arm 24. Although the camera 14 is shown mounted to the movable end of the robot art 24, it could also be mounted separately from the robot arm, e.g. on a separate boom, or on a ceiling or a wall. The camera we use in our prototype system, and the RGB images it captures, are not special in any way; these are just conventional images taken in normal lighting conditions using a conventional digital camera. The camera 14 is illustrated arranged above the boxes 12 and is used to take an RGB image 10 of the box group from above.

The various electronic control and data lines for controlling the robot arm 24 including the end effector 30 and the camera 14, and for transferring image data from the camera, may be conveniently routed through channels inside the robot upper and lower arm portions 26. A computer apparatus for performing these tasks may be integrated in the base unit 22 or connected by suitable wired or wireless connections to the base unit 22.

If the task is picking a box using a robot arm with a sucker head, then it will be desired to know the location where the sucker should be placed on the box, so the robot will want to receive the centre point of the box lid. On the other hand, if the task is picking a box from above with a robot arm fitted with a grabber, the robot will want to know the outline (i.e. boundary) of the lid in order to be able to grab the side surfaces. (Similarly, if the task is picking a box from a pallet or a whole pallet with a side approach from a driverless forklift truck, the truck will want to know at least the lower surface edge data from the outline/boundary data of the side surface of the item to be lifted.) In other grabbing or picking applications, other points, edges or other coordinates may be needed.

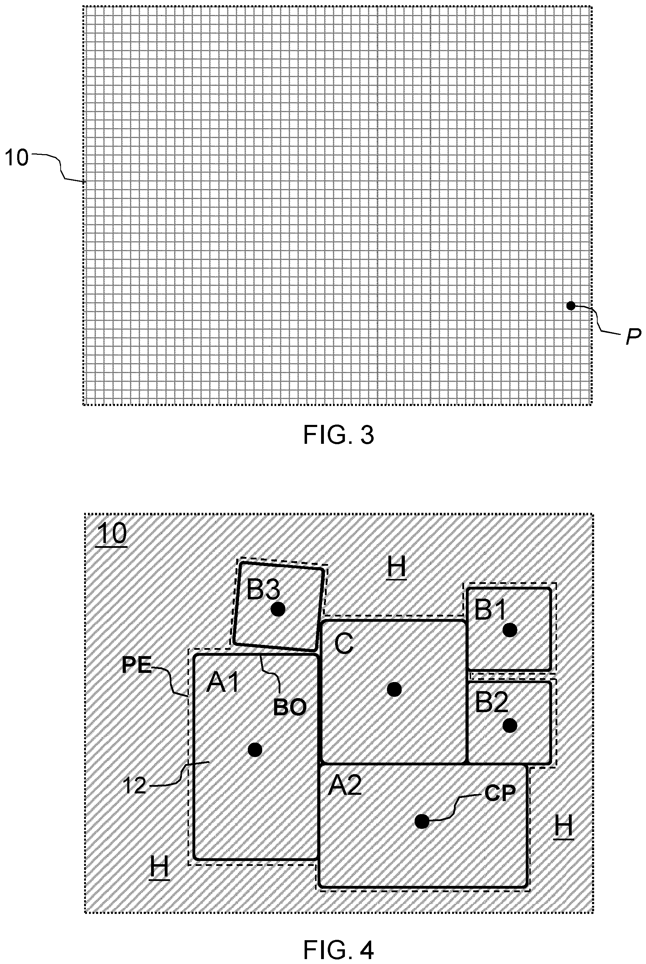

Figure 3 shows schematically the image 10 which comprises R, G and B image data components for each pixel P, the pixels P being arranged in a square grid as a 2D array.

The task of the method is to image process the RGB image 10 and output a centre point (centroid) and/or outline (boundary) of the lid of each box identified in the image.

Figure 4 reproduces the raw image of Figure 2 and additionally shows the output of our CNN method, namely a centre point (centroid) and/or outline (boundary) of the lid of each box, as shown by a blob CP and a boundary outline BO respectively, as well as an identification of which pixels are part of the background H, i.e. not part of a box lid. As schematically illustrated, the box outlines have been fitted to a geometrical shape, in this case a rectangle, so the outlines do not have the non-straight edges as illustrated in Figure 2. For a closely packed group of boxes as illustrated, the identification of background is effectively the same as the definition of a single outer perimeter boundary PE encompassing all the boxes, as illustrated by the dashed line.

Namely, our CNN is configured to predict for each pixel whether it is a background pixel or a box pixel and, for every box pixel, to assign a vector. The vector is initially given an arbitrary direction and by iterating the CNN a loss function is optimised to cause the vector to point towards the centroid of the box lid that it forms a part of. In our method, only the vector direction has significance. The vector magnitude is arbitrary.

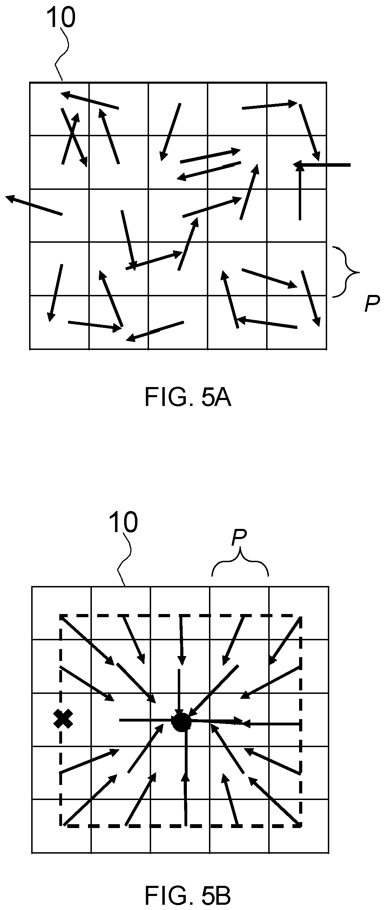

Figures 5A and 5B show the principles of our CNN method schematically with an artificially small 5 x 5 pixel array which coincides with a box lid.

Figure 5A shows the initial arbitrary vector assignment with each pixel P having one vector and each vector pointing in a randomly assigned direction.

Figure 5B shows a near perfect result (more perfect than is usual in our real experiments) after optimising the loss function using a watershed algorithm as described in detail further below. The vectors are now pointing to the centre pixel. It will however be appreciated that it is not possible even theoretically for all vectors to point to the centre point, since the vector of the centre pixel by definition cannot point to itself, so in the idealised result shown all pixel vectors except the centre pixel vector point to the centre pixel. The computed centre point (centroid) is shown as a blob and the computed boundary is shown as a dotted line. The boundary is in effect a segmentation mask for the box. If a vector points out of the box to a background pixel (see pixel on left-hand side at mid-height), then it is taken as a null result, as schematically shown by the cross in Figure 5B. In practice, with a large pixel array, the computed boundary edges will not be straight as shown in Figure 5B. Consequently, the computed boundary edges can then be fitted to an a *priori* defined geometrical shape, which would be a rectangle in the illustrated example of a cuboid box, so that the boundary edges become straight (or follow some other geometric line).

A significant conceptual aspect of the proposed boundary-finding method is that, since the boundary has been derived from following the vector fields "outwards" i.e. in a distal sense, what is the outside and what is the inside of the boundary is part of the information contained in the result. For touching objects this can be important, since the image itself may not resolve the existence of two touching boundary portions of adjacent objects, but rather may only show a single edge. That is, the proposed method does not involve directly resolving edges in the image, but rather is conceptually more akin to a conventional blob growing method.

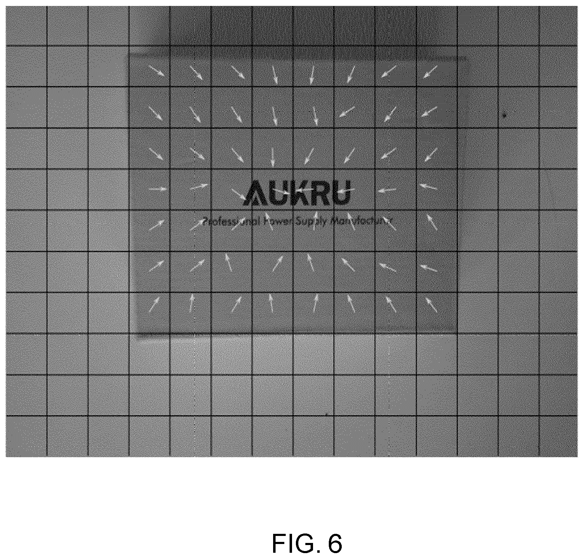

Figure 6 shows a real example image of a single cardboard box taken from above, i.e. showing only the lid, with the calculated pixel vectors for the image superimposed. The vectors are shown white to distinguish them from the background. The image is RGB, i.e. colour, but is shown grey to comply with patent rules. The grid size used by the neural network was 14 x 11 (width x height). The vectors are within the grid elements. There are 8 x 7 (56) trained vectors, the other pixels without vectors having been identified as background pixels. In the middle of the box lid, there are two vectors with almost opposite directions; here the centroid would jump from one to another in each iteration. Nevertheless, this would be an optimal convergence.

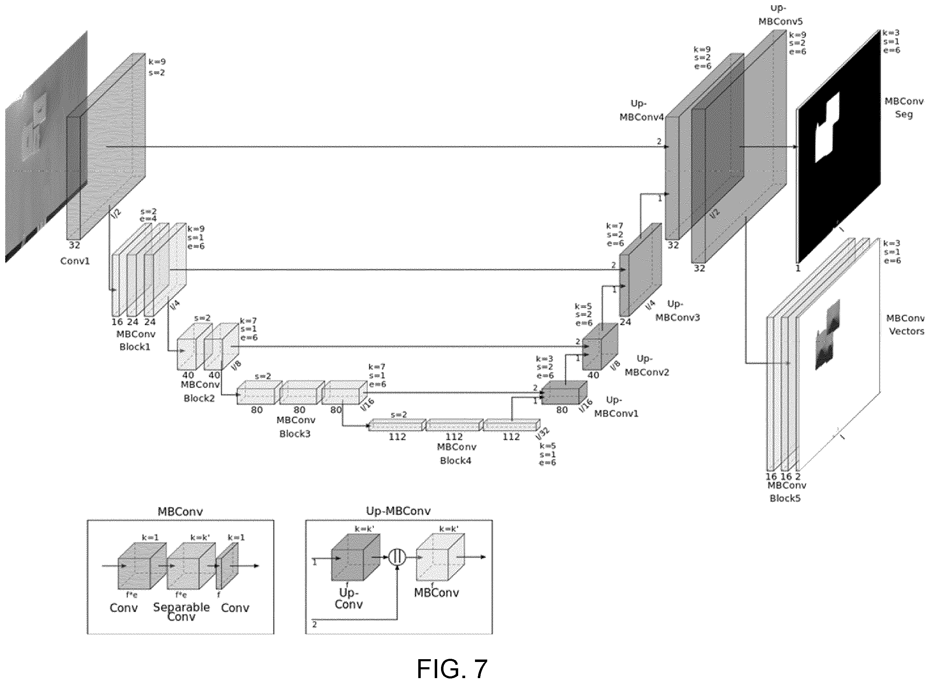

Figure 7 shows schematically the neural network architecture. The overall architecture of the pipeline is conventional [1], novel aspects lie in how the problem is parameterised, the configuration of the loss function to optimise the weights, and the mapping between the input matrices conveying an image and the output matrices conveying a vector direction as x & y values and a background/box mask. The following key is used in the illustration:
- k: kernel size
- s: stride
- e: expansion rate
- f: number of feature maps
- k': input kernel size
- II: concatenation

Layers labelled Conv1 and MBConv Block 1, 2, 3 and 4 are convolutional layers. Layers labelled Up-MBConv 1 to 5 are transpose convolution (i.e. deconvolutional) layers. The lines interconnecting certain layers indicate skip connections between convolutional layers and deconvolutional layers. The use of skip connections is described for example in Long *et al* 2015 [4]. The skip connections allow local features from larger dimension, shallower depth layers (where "larger" and "shallow" mean a convolutional layer of lower index) to be combined with the global features from the last (i.e. smallest, deepest) convolutional layer. These skip connections provide for more accurate outlines.

The input layer (RGB input image patch) is shown on the left-side of the illustration and feeds into the first convolution layer Conv1. The final convolutional layer, i.e. the rightmost layer of MB Conv Block 4 is then fed to the deconvolution layers which upscale the data back to the same size as the input (image) patch. The outputs from the final deconvolution layer Up-MBConv 5 is the binary segmentation mask labelled MB-Conv-Seg (illustrated with an example mask of white pixels for object and black pixels for background) and the vector mask labelled MBConv-Vectors with null values for background pixels (illustrated white) and vector values for object pixels (illustrated with colour in our modelling, but visible only in greyscale in the illustration). In order to reduce the size of the image patch, we use a stride of 2 for the convolutional layers in our current implementation.

For the neural network, image patches are extracted of certain pixel dimensions, e.g. with column and/or row dimensions that have a size 2^n, e.g. 128, 256, 512, 1024 *etc*., or a simple sum of powers of 2, such as 2^n + 2^(n+1), e.g. 192 (=2^6 + 2^7) or 384 (=2^7 + 2^8). In our current implementation, the image patches are 256 x 192 pixels in size. It will be understood that the image patches can be of arbitrary size and need not be square, but that the number of pixels in the rows and columns of a patch preferably conform to 2^n or simple sums of 2^n, where n is a positive integer. This is because powers of 2 will generally be more amenable for direct digital processing by a suitable single CPU (central processing unit), GPU (graphics processing unit) or TPU (tensor processing unit), or arrays thereof.

We note that 'patch' is a term of art used to refer to an image portion taken from an image, typically with a square or rectangular shape. In this respect we note that a captured image may contain a much larger array of pixels than can be handled by the image processing, so the image processing will typically be applied to patches which are of a manageable size for processing by a neural network.

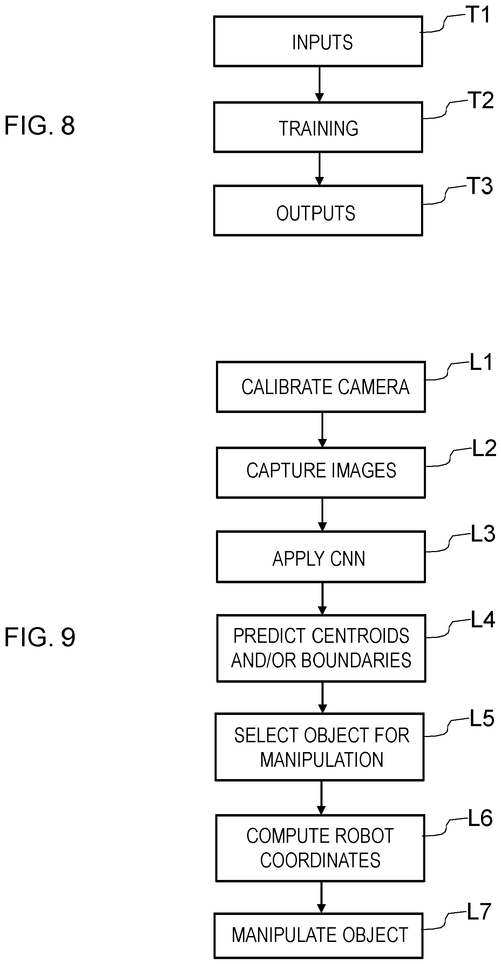

Figure 8 is a flow chart of the training process applied to train the CNN. The steps T1 to T3 of the training procedure are as follows:
1. **inputs**: triplets of RGB image, ground truth segmentation mask, ground truth vector field values.
2. **training**: optimise two loss functions, one for the segmentation and the other for the vector fields, as described above.
3. **outputs**: set of CNN weights for use in the live system.

We train separately for the segmentation mask and the vector field, defining separate loss functions for these two outputs in order to optimise the weights.

For the segmentation, i.e. to distinguish background pixels from object pixels, we train based on a binary cross-entropy loss function (see https://peltarion.com/knowledge-center/documentation/modeling-view/build-an-ai-model/loss-functions/binary-crossentropy). Binary cross-entropy measures the distance between the respective ground truth and neural-network determined label, which can be either 0 or 1 for false prediction and true prediction of whether a given pixel is or is not background pixel.

For the vector field, we train based on an angular similarity loss function, where angular similarity is related to, but not the same as the more familiar cosine similarity. In our implementation, the angular similarity α is between two vectors of unit length, one for the ground truth and the other as determined by the neural network. Angular distance can be taken as the output of the loss function, this being a scalar result in the positive value range of [0, 2] (see https://en.wikipedia.org/wiki/Cosine similarity). Our experiments show that an angular similarity loss function optimises the weights in a way that leads to very accurate predictions of the vector field. This approach avoids the disadvantage of cosine similarity that gives a result in the value range of [-1, 1], i.e. negative and positive.

Training the neural network can be performed using mini-batch gradient descent. Training the network may be done on a GPU, CPU or a FPGA using any one of several available deep learning frameworks. For example, Google Tensorflow or Microsoft CNTK can be used.

First, we search for an optimal learning rate by using the learning rate range test (see v6 of Smith "Cyclical Learning Rates for Training Neural Networks" [6]). Before training the neural network, we create a range of learning rates - e.g. learning_rate_range = [1e-6, 1e-5, 1e-4, 1e-3, 1e-2, 1e-1, 1, 2, 5]. Then we use every learning rate in that list, train the network for a few iterations (e.g. 30 iterations) and track the loss after each training step. We then compute the mean of each loss and the learning rate. The learning rate with the highest slope of decreasing the loss is then selected.

For training the network, we use the adaptive learning rate optimisation algorithm "Adam" [7]. For this we use default beta values (beta1 = 0.9, beta2=0.999) and a learning rate warm start (linear, 10% of all iterations, from 1e-6 to the learning rate found by the learning rate range test) in order to avoid learning in the wrong direction. There is no weight decay. Batch-Size is 42. To avoid overfitting, we use data augmentation on top of the generated, simulated data (e.g. to add coarse occlusions and noise, to change colours) as well as early stopping to obtain reliable weights for the validation data. For programming the training, we use the software library Tensorflow 1.13.1 & Tensorflow 2.0.0 with Nvidia's CUDA 10.0 & CuDNN 6.4.0 within the operating system Ubuntu 18.04. The training is run on the GPU: Nvidia Geforce GTX 1080 Ti. In our system, training of 200 epochs with 100,000 training examples takes around 48 hours; one training step takes around 1-2 seconds. The speed of the training can be increased by using multiple GPUs in parallel. Mixed-precision training can also be used as an additional accelerator.

The training is based on a library of RGB training images of scenes in which a group of cuboid objects, such as boxes, is arranged, where the objects are standing on a flat surface and arranged next to each other in an arbitrary way. In most scenes, several of the objects in the group are touching each other by their sides. In addition, some training images may be of a scene with only one object or even of scenes for control purposes with no objects. Each RGB image comprises three component images: R, G & B. Each component image is supplemented with ground-truth metadata as follows. Each pixel is marked as belonging to the background or an object lid with a binary parameter. We refer to this as a segmentation mask or binary mask. For a given training image, a single binary mask is provided for each of its R, G and B component images, where every pixel in the RGB image has a corresponding pixel in the binary mask (image). The binary mask is computed for the training image after assigning an outline or boundary to each object, e.g. box lid. In addition, each object pixel is assigned a vector which is pointing to the centroid of the object surface. We refer to the vector having an origin, tail or distal end in its own pixel and a head or proximal end which points in a particular direction. (Vector magnitude carries no information in our implementation, so all vectors have an arbitrary magnitude, which may be set to unity, for example.) The vector directions for each pixel belonging to a particular object surface are computed for the training image after assigning one pixel to be the pixel that is located at the centroid of that object surface. For a given training image, the vector mask will be the same for each of its R, G and B component images. The vector direction is carried by two scalar parameters for x and y directions in Cartesian coordinates. Other coordinate systems could be used such as, for 2D, polar coordinates. If the problem is a 3D one, e.g. based on X-ray computer tomography (CT), magnetic resonance (MR), positron emission tomography (PET) or combined PET/CT image data, then Cartesian, cylindrical polar or spherical polar coordinates could be used. The ground truth data in each training image thus consists of a binary mask distinguishing object pixels from background pixels and a vector mask of centroid-pointing vectors for the object pixels, the ground truth data having been automatically computed from a human marking the object outlines and centroids in the training image. The use of the binary segmentation mask to distinguish object pixels from background pixels reduces the computation intensity needed to optimise the vector mask.

Additionally, it may be desirable to fine tune a generic model to the specific application scenario (e.g. if training was done on synthetic data).

Figure 9 is a flow chart of the live process using the trained CNN.

The steps L1 to L7 of the live procedure are as follows:
1. **calibrate camera**: The camera is first calibrated to the robot base to determine the transformation matrix from image pixel coordinates of the camera (e.g. the centroid within the image) to the coordinate system of the robot. For calibration, we use the DLR Camera Calibration Toolbox Software with tools "CalLab" and "CalDe". This software is available from the Institute of Robotics and Mechatronics of the Deutsches Zentrum für Luft- und Raumfahrt e. V. (DLR) (https://www.dlr.de/rm/desktopdefault.aspx/tabid-3925/6084 read-9201/).
2. **capture images**: After calibration, the robot can freely retrieve and use images from the camera, since the images will be transformed into the robot's coordinate space using the transformation matrix.
3. **apply CNN**: The CNN is applied to obtain the segmentation mask and the vector field. For input into the CNN, the RGB image is resized to the size needed by the neural network. In our current implementation this is 256 x 192 x 3 as mentioned above. (To avoid potential unreliable outcomes, the input image size of the neural network should be the same as the image size used during the prior training phase). In respect of the output, the segmentation mask takes one channel and the vector field two channels, i.e. in our current implantation the segmentation mask has the dimensions 256 x 192 x 1 and the vector field has the dimensions 256 x 192 x 2 (width x height x channel).
4. **predict centroids and/or boundaries**: To detect object centroids we proceed as follows. First, the segmentation mask is applied to the vector field to zero the vectors that are background by multiplying the two together. The only non-zero vectors are now within the object area. Then, the centroids of the objects are determined. There are multiple options for finding the centroids. One option is to use a watershed algorithm where conceptual water drops drain to local minima. Our current implementation uses a watershed algorithm with a rainfall approach. A conceptual water drop is initially assigned to each object pixel (i.e. not to the background pixels). Each water drop then flows from pixel to pixel following the direction of the vector in each pixel, like water falling on a roof and running over the roof surface into the gutter under the influence of gravity. At each increment, the water drop flows to a neighbour pixel. As the procedure is incremented, each water drop then moves one pixel at a time following the vector at each pixel. The procedure is run in incremental steps until all water drops are static or are oscillating back and forth between adjacent pixels. If the object area is assumed a *priori* to contain only one object, then the pixel where the highest number of water drops has collected is taken as the centroid of the (single) object. If no assumption is made about the number of objects in the object area, then an object centroid can be determined based on pixels with a number of drops greater than a threshold, e.g. 10, optionally also separated from other pixels with above-threshold numbers of drops by a minimum distance corresponding to a pre-defined minimum possible object size. Applying a threshold, e.g. a pixel must have collected at least a minimum number of water drops, e.g. 10, for it to be deemed to be a centroid may also serve to prevent false positives. Another option to find the object centroids is to use a Hough transform. The Hough transform extracts the intersection of the set of lines generated from the set of vectors, i.e. each vector is used to generate one line. A pixel or multi-pixel cluster with an above-threshold number of lines going through it, can be taken as an object centroid location with similar considerations as explained above for the watershed algorithm in terms of obtaining a result in which there is one centroid for each object in the case of the object area potentially encompassing an arbitrary number of objects. Further options are to use a mean-shift algorithm, a gradient descent algorithm or a particle swarm algorithm. To predict object boundaries, we proceed in an analogous way to predicting the centroids but follow the vectors in the opposite direction. For example, using a watershed algorithm rainfall approach as described above for centroid finding this would be implemented as having the drops flowing uphill instead of downhill. Alternatively, a watershed algorithm flooding approach could be used to find the boundaries.
5. **select object for manipulation by robot:** The pixel coordinates of the centroids of the objects have now been determined. In the next step, we make a selection of one object (centroid) for manipulation by our robot (arm). A typical choice might be to select the object that is closest to the robot arm. Assuming the camera is fitted to the end of the robot arm, then this will be the object with centroid coordinates that are closest to, i.e. have the shortest distance to, the camera coordinates. In any case, the location of the camera in relation to the robot will be known and so can be taken account of. If the camera is a stereo camera, then depth data is available, so determining which of the object centroids is closest to the camera is trivial. If no depth data is in the image by the camera or derived from it, then there are several options for working around this. A separate height sensor may be mounted adjacent the camera. Another option is for a touch sensing capability to be incorporated on the end effector (e.g. force and/or torque sensors). Another option is to determine a distortion transformation from the 2D image, which is possible if it is a *priori* known and hence assumable that the boxes are cuboid and possibly also of known dimensions.
6. **compute manipulation coordinates in robot arm space:** The target positioning of the robot arm and its end effector for manipulation is calculated. The calculation may require depth information. The pixel coordinates of the centroid of the selected object, e.g. a box to be picked, in the image space is transformed to the camera coordinate system space with the calibration matrix (unprojection). The transformation matrix is the one obtained from the calibration procedure as described above. A tutorial of the procedure with a comprehensive list of bibliographic references for the various detailed algorithms which may be used can be found in the tutorial on Hand-Eye Calibration at: http://campar.in.tum.de/view/Chair/HandEyeCalibration#Robot Camera Calibration al so Tr.[8] Now we have obtained the coordinates of the centroid of the selected object in the robot's coordinate system.
7. **manipulate object:** To pick up the object (or perform some other manipulation of the object with the robot's end effector, such as applying an adhesive label to a box, marking a box by printing/spraying with ink or by laser inscription), depending on the application, it may additionally be necessary to make some determination as to the plane of the box surface. With a sucker, this may be less critical or even unnecessary. However, with grippers this will be more important. If the boxes are all assumed a *priori* to be cuboid boxes resting on a flat surface, e.g. a warehouse floor or pallet base, then it can be assumed also that the box surfaces are aligned horizontally (or vertically in the case of a side approach). On the other hand, if no such assumption is made, then we calculate the normal vector of the centroid from depth measurements, or in case of RGB-only input it can be approximated from the distortion of a perfect rectangle (homography).

The input image is thus processed by the neural network to provide two outputs, namely a segmentation mask and a vector field (one input, two outputs). The segmentation mask is then applied to the vector field in order to remove vectors in the pixels of the vector field which are background pixels as defined by lying outside the segmentation mask (predicted as "0"). The vectors in the pixels lying within the segmentation mask are retained as belonging to boxes (predicted as "1"). In short, vectors in the background are removed, and vectors in the boxes area are retained.

In case of there being no relevant object in the scene, i.e. a null result, the segmentation mask will predict that all pixels are background pixels, so that all vectors will be deleted.

Consequently, no water drops will be created by the watershed algorithm and, if there are no water drops, the process is halted.

Each box pixel (i.e. each pixel that is not masked out as background) is associated with a path's end point. We threshold on the number of end points from different pixels that lie in the same small area. If a large number of end points form a cluster, it means that many pixels belong to a box whose centroid is deemed to be located where the cluster of end points is located in the image. Since the vector values, i.e. directions, should not differ significantly between neighbouring pixels, the pixels whose end points end up together in a cluster will form a contiguous patch of pixels in the image which should correspond to a box (lid). In summary, the pixel end points are clustered, and the cluster size is taken as the number of pixels associated with the centroid predicted by that cluster. If the number of pixels in a cluster is below threshold, then that cluster is ignored so that no boxes are predicted which are too small, according to an a *priori* definition of minimum box (lid) size. Since we know which pixels have their end points in the same cluster, we can group all these pixels together to obtain the set of pixels that lie on a given box surface. Each box (lid) surface is thus segmented individually in an image of an arbitrary number of box (lid) surfaces.

Our results show that our CNN method works extremely well. It successfully identifies the centroids and boundaries of all boxes in a wide variety of circumstances. The CNN method delivers reliable results even when boxes are packed densely edge-to-edge as on a pallet, which is a scenario where segmentation using traditional image processing methods have difficulties and often identify a single box when in fact there are multiple boxes packed closely together. Extensive testing of our trained system for identifying rectangular surfaces shows that it delivers reliable results even when it is given images that deviate significantly from the images of the training set.

Specifically, our trained system operated reliably for rectangular surface identification using images that had no counterparts in the training images in respect of the following parameters: scene illumination for the camera (colour of lighting, intensity of lighting, direction of lighting); camera parameters (focal length, image resolution, sensor noise level); stereo camera parameter which is only relevant if the camera is a stereo camera (the interaxial distance between left and right camera components); box arrangement and type (arrangement of boxes in group; number of boxes in group; surface properties of boxes).

The training data images for the training are synthetically created. The synthesis is used to cover a diverse set of application scenarios. Closely packed groups of cuboid objects are synthesized with a palletting algorithm. It is noted that the synthesized scenes must be close to photorealistic in order to be of use in improving the reliability of the live system working with real images. The palletting algorithm gives cuboid groups with differing distances and orientations between the cuboids in all dimensions. The relative arrangement of the cuboids can thus differ in any of Δx, Δy, Δz, Δroll, Δpitch, Δyaw, thereby covering all possible sizes, packing conditions, displacements and orientations. In the live system, the neural network is provided with RGB images of real scenes as input.

To process the output of the neural network and obtain the centroid point of each object, we use a watershed algorithm, which is a kind of hill-finding or maxima-finding algorithm. The watershed algorithm is used to find the centroid of each box lid from the vectors.

To process the output of the neural network to obtain the boundary of each object, we proceed in an analogous way to finding the centroids, but instead by following the vectors in the opposite direction. Notionally, using a watershed algorithm rainfall approach as described above for centroid finding this would be implemented as having the drops flowing uphill instead of downhill. Alternatively, a watershed algorithm flooding approach could be used to find the boundaries.

Our method has several advantages over traditional image processing methods and known neural network methods based on training the neural network to find edges, i.e. outlines/boundaries, directly.

One advantage is that the statistical certainty of a result can be deduced naturally by measuring the correlation of how the vectors point towards a common point. If all the vectors point to the same pixel, then the result has the highest certainty of being correct. On the other hand, in a real case, the vectors will point mostly to a cluster of neighbouring pixels, from which a confidence value can be computed based on the 2D statistical distribution around a 'centre of gravity' pixel, which can yield normal statistical values such as a standard deviation. The degree of vector alignment towards a common point also provides a natural convergence measure for the iteration independent of monitoring how the weights are changing. Our method can thus not only deliver a result, but also a reliability indicator for the result.

Another advantage is that the task of segmenting the box lids, i.e. finding their boundaries, is fulfilled by the vector alignment. By pointing the vectors to the centroid (or other internal point which the neural network has been trained to find), the tails of vectors which have no head of another vector pointing towards them, i.e. the outermost ring of pixels of a given group of pixels with vectors pointing to a common point, define the boundary. Our method thus finds a boundary without attempting to find the edge features in the images, but rather as a biproduct of finding the centroid. We believe this is why our method performs so well with poor quality images of boxes that are packed closely together with touching sides, and hence near coincident edges of their lids. For touching objects, this aspect of our method appears to be important, since the image itself may not resolve the existence of two touching boundary portions of adjacent objects, but rather may only show a single edge.

A further advantage of our method is that the box orientation can be deduced. Orientation of a box is, for example, relevant for the grabbing or lifting action that the end effector of a robot arm will perform to pick the box, such as a gripper (two- or multiple-finger) or a sucker-array. The orientation can be calculated from the boundaries of the boxes. The boundaries can be determined as described above by applying the segmentation mask on the vector field to zero vectors in the background pixels and then following the vectors in the opposite direction compared with centroid finding. Once we know the boundaries of the boxes, we can fit a geometric shape to the boundary matched to a *priori* knowledge of the shape of the objects to be manipulated. For a typical cuboid box picking application, the shape will be a rectangle.

Although the specific example described in detail relates to processing an image from above of a collection of closely packed boxes, the same process can be applied to an image taken from the side of a group of boxes that have been stacked on top of each other, or an image taken from the side of a group of boxes that are both closely packed side-by-side and stacked up vertically.

Moreover, while the above description is directed to finding rectangular 2D shapes in a 2D image of a 3D scene in which the rectangular shapes are camera-facing surfaces of objects of cuboid shape, the same method can be used to identify 2D or 3D objects of any shape or form provided that appropriate training is given to the neural network.

It will also be understood that while the input images used in our implementation are colour, the method may also be applied to greyscale images. Examples of inherently greyscale images are medical imaging modalities such as CT or PET images and some MR images. The method may also be applied to multi-modality images, such as combined CT/PET or MR images with two different contrast agents, where the composited image is analogous to a conventional two-colour image.

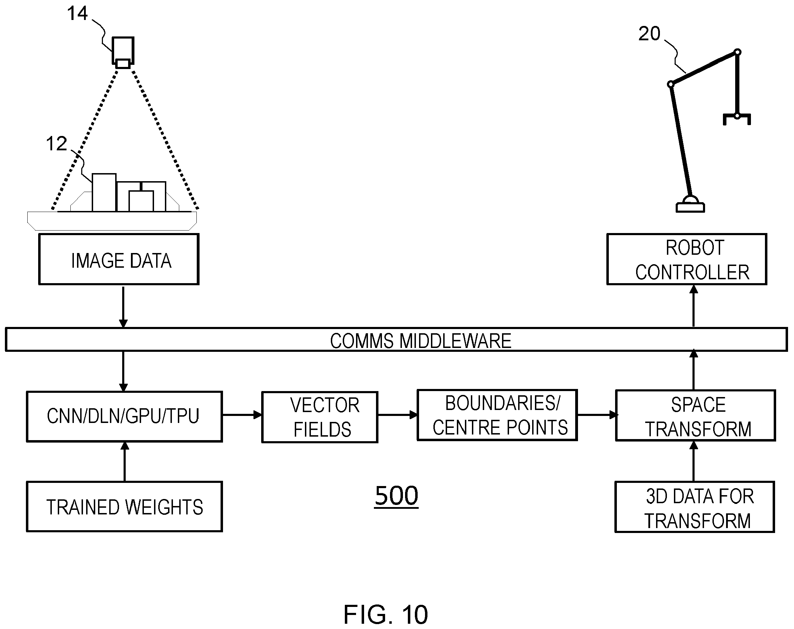

Figure 10 is a schematic block diagram showing functional parts of the computing apparatus 500 used to acquire images, process the images, and control the robot to perform a task, such as a picking task of an object identified by the image processing, according to an implementation of the disclosure. Figure 10 additionally schematically illustrates the robot apparatus 20 and the camera 14 which acquires the images to be processed of the boxes 12.

Image data from each acquired image is communicated from the digital camera 14 via communication middleware to a deep learning DL network for Al as described above with reference to Figure 7 comprising suitable processing hardware. The proposed Al processing may be carried out on a variety of computing architectures, in particular ones that are optimised for neural networks, which may be based on CPUs, GPUs, TPUs, FPGAs and/or ASICs. In some embodiments, the neural network is implemented using Google's Tensorflow software library running on Nvidia GPUs from Nvidia Corporation, Santa Clara, California, such as the Tesla K80 GPU. In other embodiments, the neural network can run on generic CPUs. Faster processing can be obtained by a purpose-designed processor for performing CNN calculations, for example the TPU disclosed in Jouppi *et al* 2017 [5] which is described in more detail below. With the weights that have been optimised by the training process as described above, the DL network computes and outputs the vector fields from which rectangle centre points and/or boundaries are determined as described above. The computing apparatus then converts these 2D image space coordinates into the robot's 3D coordinate space by performing a transform using the transformation matrix described above. The transform also needs as input additional 3D spatial information to convert from the 2D image space to the 3D coordinate space used by the robot (e.g. by homography as described above). Of course, if a 3D camera is used, then the image space is already in 3D so this extra information is not needed. The grasping point(s) for the robot's end effector 30 can then be determined. These are then output to a robot controller which then controls the robot apparatus to execute the grasp, i.e. grasp the selected box and move it to a new location as specified.

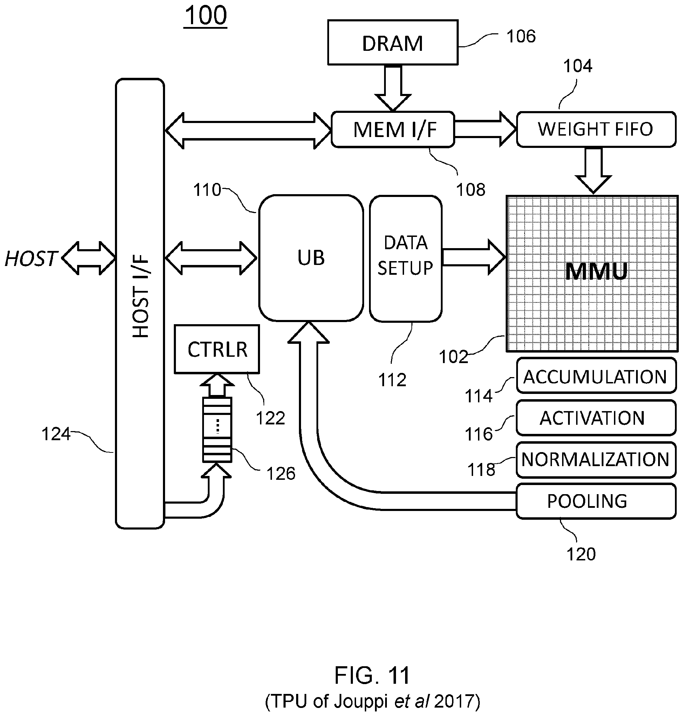

Figure 11 shows the TPU of Jouppi *et al* 2017 [5], being a simplified reproduction of Jouppi's Figure 1. The TPU 100 has a systolic matrix multiplication unit (MMU) 102 which contains 256x256 MACs that can perform 8-bit multiply-and-adds on signed or unsigned integers. The weights for the MMU are supplied through a weight FIFO buffer 104 that in turn reads the weights from a memory 106, in the form of an off-chip 8GB DRAM, via a suitable memory interface 108. A unified buffer (UB) 110 is provided to store the intermediate results. The MMU 102 is connected to receives inputs from the weight FIFO interface 104 and the UB 110 (via a systolic data setup unit 112) and outputs the 16-bit products of the MMU processing to an accumulator unit 114. An activation unit 116 performs nonlinear functions on the data held in the accumulator unit 114. After further processing by a normalizing unit 118 and a pooling unit 120, the intermediate results are sent to the UB 110 for resupply to the MMU 102 via the data setup unit 112. The pooling unit 120 may perform maximum pooling (i.e. maxpooling) or average pooling as desired. A programmable DMA controller 122 transfers data to or from the TPU's host computer and the UB 110. The TPU instructions are sent from the host computer to the controller 122 via a host interface 124 and an instruction buffer 126.

It will be understood that the computing power used for running the neural network, whether it be based on CPUs, GPUs or TPUs, may be hosted locally in a computer network, e.g. the one described below, or remotely in a data centre which constitutes a network node. Moreover, an Al processing node may correspond to a single piece of physical processing equipment, e.g. as arranged in one or more racks of a server, or may itself be distributed over two or more pieces of physical processing equipment.

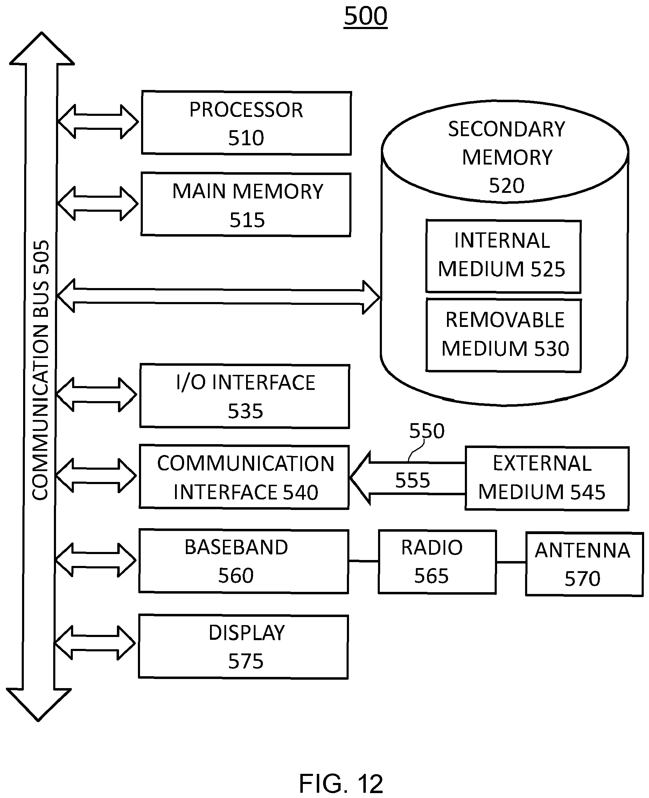

Figure 12 is a block diagram illustrating an example computing apparatus 500 that may be used in connection with various embodiments described herein. For example, computing apparatus 500 may be used as a computing node in the above-mentioned computer network system, for example a host computer from which CNN processing is carried out in conjunction with a suitable GPU, or the TPU shown in Figure 11.

Computing apparatus 500 can be a server or any conventional personal computer, or any other processor-enabled device that is capable of wired or wireless data communication. Other computing apparatus, systems and/or architectures may be also used, including devices that are not capable of wired or wireless data communication, as will be clear to those skilled in the art.

Computing apparatus 500 preferably includes one or more processors, such as processor 510. The processor 510 may be for example a CPU, GPU, TPU or arrays or combinations thereof such as CPU and TPU combinations or CPU and GPU combinations. Additional processors may be provided, such as an auxiliary processor to manage input/output, an auxiliary processor to perform floating point mathematical operations (e.g. a TPU), a special-purpose microprocessor having an architecture suitable for fast execution of signal processing algorithms (e.g., digital signal processor, image processor), a slave processor subordinate to the main processing system (e.g., back-end processor), an additional microprocessor or controller for dual or multiple processor systems, or a coprocessor. Such auxiliary processors may be discrete processors or may be integrated with the processor 510. Examples of CPUs which may be used with computing apparatus 500 are, the Pentium processor, Core i7 processor, and Xeon processor, all of which are available from Intel Corporation of Santa Clara, California. An example GPU which may be used with computing apparatus 500 is Tesla K80 GPU of Nvidia Corporation, Santa Clara, California.

Processor 510 is connected to a communication bus 505. Communication bus 505 may include a data channel for facilitating information transfer between storage and other peripheral components of computing apparatus 500. Communication bus 505 further may provide a set of signals used for communication with processor 510, including a data bus, address bus, and control bus (not shown). Communication bus 505 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, or standards promulgated by the Institute of Electrical and Electronics Engineers (IEEE) including IEEE 488 general-purpose interface bus (GPIB), IEEE 696/S-100, and the like.

Computing apparatus 500 preferably includes a main memory 515 and may also include a secondary memory 520. Main memory 515 provides storage of instructions and data for programs executing on processor 510, such as one or more of the functions and/or modules discussed above. It should be understood that computer readable program instructions stored in the memory and executed by processor 510 may be assembler instructions, instruction-set-architecture (ISA) instructions, machine instructions, machine dependent instructions, microcode, firmware instructions, state-setting data, configuration data for integrated circuitry, or either source code or object code written in and/or compiled from any combination of one or more programming languages, including without limitation Smalltalk, C/C++, Java, JavaScript, Perl, Visual Basic, .NET, and the like. Main memory 515 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Secondary memory 520 may optionally include an internal memory 525 and/or a removable medium 530. Removable medium 530 is read from and/or written to in any well-known manner. Removable storage medium 530 may be, for example, a magnetic tape drive, a compact disc (CD) drive, a digital versatile disc (DVD) drive, other optical drive, a flash memory drive, *etc.*

Removable storage medium 530 is a non-transitory computer-readable medium having stored thereon computer-executable code (i.e., software) and/or data. The computer software or data stored on removable storage medium 530 is read into computing apparatus 500 for execution by processor 510.

The secondary memory 520 may include other similar elements for allowing computer programs or other data or instructions to be loaded into computing apparatus 500. Such means may include, for example, an external storage medium 545 and a communication interface 540, which allows software and data to be transferred from external storage medium 545 to computing apparatus 500. Examples of external storage medium 545 may include an external hard disk drive, an external optical drive, an external magneto- optical drive, *etc.* Other examples of secondary memory 520 may include semiconductor- based memory such as programmable read-only memory (PROM), erasable programmable read-only memory (EPROM), electrically erasable read-only memory (EEPROM), or flash memory (block-oriented memory similar to EEPROM).

As mentioned above, computing apparatus 500 may include a communication interface 540. Communication interface 540 allows software and data to be transferred between computing apparatus 500 and external devices (e.g. printers), networks, or other information sources. For example, computer software or executable code may be transferred to computing apparatus 500 from a network server via communication interface 540. Examples of communication interface 540 include a built-in network adapter, network interface card (NIC), Personal Computer Memory Card International Association (PCMCIA) network card, card bus network adapter, wireless network adapter, Universal Serial Bus (USB) network adapter, modem, a network interface card (NIC), a wireless data card, a communications port, an infrared interface, an IEEE 1394 fire-wire, or any other device capable of interfacing system 550 with a network or another computing device. Communication interface 540 preferably implements industry-promulgated protocol standards, such as Ethernet IEEE 802 standards, Fibre Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customised or non-standard interface protocols as well.

Software and data transferred via communication interface 540 are generally in the form of electrical communication signals 555. These signals 555 may be provided to communication interface 540 via a communication channel 550. In an embodiment, communication channel 550 may be a wired or wireless network, or any variety of other communication links. Communication channel 550 carries signals 555 and can be implemented using a variety of wired or wireless communication means including wire or cable, fibre optics, conventional phone line, cellular phone link, wireless data communication link, radio frequency ("RF") link, or infrared link, just to name a few.

Computer-executable code (i.e., computer programs or software) is stored in main memory 515 and/or the secondary memory 520. Computer programs can also be received via communication interface 540 and stored in main memory 515 and/or secondary memory 520. Such computer programs, when executed, enable computing apparatus 500 to perform the various functions of the disclosed embodiments as described elsewhere herein.

In this document, the term "computer-readable medium" is used to refer to any non-transitory computer-readable storage media used to provide computer-executable code (e.g., software and computer programs) to computing apparatus 500. Examples of such media include main memory 515, secondary memory 520 (including internal memory 525, removable medium 530, and external storage medium 545), and any peripheral device communicatively coupled with communication interface 540 (including a network information server or other network device). These non-transitory computer-readable media are means for providing executable code, programming instructions, and software to computing apparatus 500. In an embodiment that is implemented using software, the software may be stored on a computer-readable medium and loaded into computing apparatus 500 by way of removable medium 530, I/O interface 535, or communication interface 540. In such an embodiment, the software is loaded into computing apparatus 500 in the form of electrical communication signals 555. The software, when executed by processor 510, preferably causes processor 510 to perform the features and functions described elsewhere herein.

I/O interface 535 provides an interface between one or more components of computing apparatus 500 and one or more input and/or output devices. Example input devices include, without limitation, keyboards, touch screens or other touch-sensitive devices, biometric sensing devices, computer mice, trackballs, pen-based pointing devices, and the like. Examples of output devices include, without limitation, cathode ray tubes (CRTs), plasma displays, light-emitting diode (LED) displays, liquid crystal displays (LCDs), printers, vacuum florescent displays (VFDs), surface-conduction electron-emitter displays (SEDs), field emission displays (FEDs), and the like.

Computing apparatus 500 also includes optional wireless communication components that facilitate wireless communication over a voice network and/or a data network. The wireless communication components comprise an antenna system 570, a radio system 565, and a baseband system 560. In computing apparatus 500, radio frequency (RF) signals are transmitted and received over the air by antenna system 570 under the management of radio system 565.

Antenna system 570 may comprise one or more antennae and one or more multiplexors (not shown) that perform a switching function to provide antenna system 570 with transmit and receive signal paths. In the receive path, received RF signals can be coupled from a multiplexor to a low noise amplifier (not shown) that amplifies the received RF signal and sends the amplified signal to radio system 565.

Radio system 565 may comprise one or more radios that are configured to communicate over various frequencies. In an embodiment, radio system 565 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 565 to baseband system 560.

If the received signal contains audio information, then baseband system 560 decodes the signal and converts it to an analogue signal. Then the signal is amplified and sent to a speaker. Baseband system 560 also receives analogue audio signals from a microphone. These analogue audio signals are converted to digital signals and encoded by baseband system 560. Baseband system 560 also codes the digital signals for transmission and generates a baseband transmit audio signal that is routed to the modulator portion of radio system 565. The modulator mixes the baseband transmit audio signal with an RF carrier signal generating an RF transmit signal that is routed to antenna system 570 and may pass through a power amplifier (not shown). The power amplifier amplifies the RF transmit signal and routes it to antenna system 570 where the signal is switched to the antenna port for transmission.

Baseband system 560 is also communicatively coupled with processor 510, which may be a central processing unit (CPU). Processor 510 has access to data storage areas 515 and 520. Processor 510 is preferably configured to execute instructions (i.e., computer programs or software) that can be stored in main memory 515 or secondary memory 520. Computer programs can also be received from baseband processor 560 and stored in main memory 510 or in secondary memory 520 or executed upon receipt. Such computer programs, when executed, enable computing apparatus 500 to perform the various functions of the disclosed embodiments. For example, data storage areas 515 or 520 may include various software modules.

The computing apparatus further comprises a display 575 directly attached to the communication bus 505 which may be provided instead of or addition to any display connected to the I/O interface 535 referred to above.

Various embodiments may also be implemented primarily in hardware using, for example, components such as application specific integrated circuits (ASICs), programmable logic arrays (PLA), or field programmable gate arrays (FPGAs). Implementation of a hardware state machine capable of performing the functions described herein will also be apparent to those skilled in the relevant art. Various embodiments may also be implemented using a combination of both hardware and software.

Furthermore, those of skill in the art will appreciate that the various illustrative logical blocks, modules, circuits, and method steps described in connection with the above described figures and the embodiments disclosed herein can often be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a module, block, circuit, or step is for ease of description. Specific functions or steps can be moved from one module, block, or circuit to another without departing from the invention.

Moreover, the various illustrative logical blocks, modules, functions, and methods described in connection with the embodiments disclosed herein can be implemented or performed with a general purpose processor, a digital signal processor (DSP), an ASIC, FPGA, or other programmable logic device, discrete gate or transistor logic, discrete hardware components, or any combination thereof designed to perform the functions described herein. A general-purpose processor can be a microprocessor, but in the alternative, the processor can be any processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration.

Additionally, the steps of a method or algorithm described in connection with the embodiments disclosed herein can be embodied directly in hardware, in a software module executed by a processor, or in a combination of the two. A software module can reside in RAM memory, flash memory, ROM memory, EPROM memory, EEPROM memory, registers, hard disk, a removable disk, a CD-ROM, or any other form of storage medium including a network storage medium. An exemplary storage medium can be coupled to the processor such that the processor can read information from, and write information to, the storage medium. In the alternative, the storage medium can be integral to the processor. The processor and the storage medium can also reside in an ASIC.

A computer readable storage medium, as referred to herein, is not to be construed as being transitory signals *per se*, such as radio waves or other freely propagating electromagnetic waves, electromagnetic waves propagating through a waveguide or other transmission media (e.g., light pulses passing through a fibre-optic cable), or electrical signals transmitted through a wire.

Any of the software components described herein may take a variety of forms. For example, a component may be a stand-alone software package, or it may be a software package incorporated as a "tool" in a larger software product. It may be downloadable from a network, for example, a website, as a stand-alone product or as an add-in package for installation in an existing software application. It may also be available as a client- server software application, as a web-enabled software application, and/or as a mobile application.

Embodiments of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The illustrated flowcharts and block diagrams illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Apparatus and methods embodying the invention are capable of being hosted in and delivered by a cloud-computing environment. Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

In summary, we have described an image processing method and apparatus for segmenting an image to find objects of interest in a scene as well as associated training methods. To perform the image processing method, an image is subdivided into a mesh of finite elements. A vector is assigned to each finite element. Each vector is anchored in its finite element and has a direction that is initially set to an arbitrary value. A pre-trained neural network is then applied to determine directions for the vectors, wherein the neural network has been previously trained to minimise cost in a loss function where cost is minimised when all vectors associated with an object of interest are pointing to a common point lying within a boundary associated with that object. Objects of interest in the image are identified through analysis of the vector directions, since all vectors associated with a particular object will point towards a common centre point. The object boundaries are also automatically yielded from the same result, since the extent of each object is defined by the set of vectors which point to a common centre point.

It will be clear to one skilled in the art that many improvements and modifications can be made to the foregoing exemplary embodiments without departing from the scope of the present disclosure.

### REFERENCES

[1] Simonyan and Zisserman. 2014. "Very Deep Convolutional Networks for Large-Scale Image Recognition." ArXiv Preprint ArXiv:1409.1556
[2] US 2018/0137642 A1
[3] Xie, Xiang, Mousavian and Fox arXiv:1907.13236v1 [cs.CV] 30 Jul 2019 in "The Best of Both Modes: Separately Leveraging RGB and Depth for Unseen Object Instance Segmentation"
[4] Long, Jonathan, Evan Shelhamer, and Trevor Darrell. 2015. "Fully Convolutional Networks for Semantic Segmentation." In Proceedings of the IEEE Conference on Computer Vision and Pattern Recognition, pages 3431-40 Computer Vision and Pattern Recognition (cs.CV), arXiv:1411.4038 [cs.CV]
[5] Jouppi, Young, Patil et al "In-Datacenter Performance Analysis of a Tensor Processing Unit" 44th International Symposium on Computer Architecture (ISCA), Toronto, Canada, 24-28 June 2017 (submitted 16 April 2017), arXiv:1704.04760 [cs.AR]
[6] Smith "Cyclical Learning Rates for Training Neural Networks" arXiv:1506.01186v6 https://arxiv.org/pdf/1506.01186.pdf
[7] Diederik P. Kingma and Jimmy Lei Ba. Adam: "A method for stochastic optimization" 2014. arXiv:1412.6980v9
[8] Tutorial on Hand-Eye Calibration: http://campar.in.tum.de/view/Chair/HandEveCalibration#Robot Camera C alibration also Tr

The above references are incorporated herein by reference in their entirety.

## Claims

1. An image processing method for segmenting an image to find objects of interest in a scene, the method comprising:
providing a set of image data comprising pixels or voxels representing an image of a scene;
subdividing the image into a mesh of finite elements within which each finite element has at least three neighbouring finite elements with a common line or surface;
assigning a vector to each finite element, wherein each vector is anchored in its finite element and has a direction, the direction being assigned an initial value that is arbitrary;
applying a trained neural network to determine a vector direction for at least a subset of the finite elements, wherein the neural network has been previously trained to minimise cost in a loss function where cost is minimised when all vectors associated with an object of interest are pointing to a common point lying within a boundary associated with that object; and
identifying any objects of interest in the image through analysis of the vector directions.

2. The method of claim 1, wherein determination of a vector direction is confined to a subset of the finite elements, the subset representing finite elements determined to relate to objects of interest, wherein the neural network has been previously trained also to minimise cost in a further loss function where cost is minimised when finite elements relating to objects of interest and finite elements not relating to objects of interest are assigned different values.

3. The method of claim 1 or 2, wherein each object of interest identified in the image is assigned a point based on the analysis of the vector directions for that object.

4. The method of any preceding claim, wherein each object of interest identified in the image is assigned a boundary based on the analysis of the vector directions for that object.

5. The method of any preceding claim, wherein the neural network has a set of three input matrices bearing first, second and third scalar attributes of the image data, each input matrix having an array of elements corresponding to the finite elements of the mesh, and a set of three output matrices each bearing corresponding first, second and third attributes, at least two of which are associated with respective scalar values which together indicate a vector direction for the vector.

6. The method of claim 5, wherein a third attribute in the output matrices is associated with a value representing whether an object of interest is associated with that element or not.

7. The method of claim 5 or 6, wherein the first, second and third scalar attributes in the input matrix represent respective primary colours in the image data.

8. The method of any preceding claim, wherein the previous training is directed to identifying objects of interest that are at least approximately rectangular or cuboid in shape.

9. The method of any preceding claim, further comprising outputting the point of each object identified in the image.

10. The method of any preceding claim, further comprising outputting the boundary of each object identified in the image.

11. A computer apparatus configured to perform segmentation on an image to find objects of interest in a scene, the computer apparatus comprising:
a memory operable to store a set of image data comprising pixels or voxels representing an image of a scene and loaded with instructions embodying a neural network trained to process images of the type stored in the memory; and
a processor configured to cooperate with the memory so as to be operable to:
load an image from the memory;
subdivide the image into a mesh of finite elements within which each finite element has at least three neighbouring finite elements with a common line or surface;
assign a vector to each finite element, wherein each vector is anchored in its finite element and has a direction, the direction being assigned an initial value that is arbitrary;
apply the neural network to determine a vector direction for at least a subset of the finite elements, wherein the neural network has been previously trained to minimise cost in a loss function where cost is minimised when all vectors associated with an object of interest are pointing to a common point lying within a boundary associated with that object;
identify any objects of interest in the image through analysis of the vector directions; and
output data relating to the objects of interest.

12. A method of training a neural network to segment an image to find objects of interest in a scene, the method comprising:
providing a library of training images, each training image comprising a set of image data of pixels or voxels representing an image of a scene;
subdividing the image into a mesh of finite elements within which each finite element has at least three neighbouring finite elements with a common line or surface;
supplementing each training image with ground-truth data indicating boundaries of any objects of interest in the image and a point within each object of interest, the ground-truth data comprising a vector assigned to each finite element, wherein each vector is anchored in its finite element and is given a direction that points towards the point for that object; and
training the neural network by minimizing a loss function, where cost is minimised when all vectors associated with each ground-truth object in the training image are pointing to the ground-truth point for that object.

13. The method of claim 12, wherein training the neural network involves adjusting weights in the loss function to provide better alignment between the vectors computed by the loss function and the vectors in the ground-truth data.

14. The method of claim 12 or 13, wherein the library of training images includes training images containing multiple objects of interest, some of which have closely adjacent boundary portions.

15. A computer apparatus configured to train a neural network to segment an image to find objects of interest in a scene, the computer apparatus comprising:
a memory in which is stored a library of training images, each training image comprising a set of image data of pixels or voxels representing an image of a scene as well as ground-truth data indicating boundaries of any objects of interest in the image and a point within each object of interest, the ground-truth data comprising a vector assigned to each finite element, wherein each vector is anchored in its finite element and is given a direction that points towards the point for that object; and
a processor configured to cooperate with the memory so as to be operable to:
load a training image from the memory;
subdivide the training image into a mesh of finite elements within which each finite element has at least three neighbouring finite elements with a common line or surface; and
train the neural network by minimizing a loss function, where cost is minimised when all vectors associated with each ground-truth object in the training image are pointing to the ground-truth point for that object.

## Amended claims

### Amended claims in accordance with Rule 137(2) EPC.

1. An image processing method for segmenting an image (10) to find objects (12) of interest in a scene, the method comprising:
providing a set of either two-dimensional or three-dimensional image data comprising respectively either pixels or voxels representing an image of a scene;
subdividing the image data into a mesh of finite elements by mapping either the pixels or voxels onto the finite elements, wherein within the mesh each finite element has at least three neighbouring finite elements with either a common line or a common surface in case of the image data being two-dimensional or three-dimensional respectively;
assigning a vector to each finite element, wherein each vector is anchored in its finite element and has a direction, the direction being assigned an initial value that is arbitrary;
applying a trained neural network to determine a vector direction for at least a subset of the finite elements, wherein the neural network has been previously trained to minimise cost in a loss function where cost is minimised when all vectors associated with an object of interest are pointing to a common point lying within a boundary associated with that object; and
identifying any objects of interest in the image through analysis of the vector directions.

2. The method of claim 1, wherein determination of a vector direction is confined to a subset of the finite elements, the subset representing finite elements determined to relate to objects of interest, wherein the neural network has been previously trained also to minimise cost in a further loss function where cost is minimised when finite elements relating to objects of interest and finite elements not relating to objects of interest are assigned different values.

3. The method of claim 1 or 2, wherein each object of interest identified in the image is assigned a point based on the analysis of the vector directions for that object.

4. The method of any preceding claim, wherein each object of interest identified in the image is assigned a boundary based on the analysis of the vector directions for that object.

5. The method of any preceding claim, wherein the neural network has a set of three input matrices bearing first, second and third scalar attributes of the image data, each input matrix having an array of elements corresponding to the finite elements of the mesh, and a set of three output matrices each bearing corresponding first, second and third attributes, at least two of which are associated with respective scalar values which together indicate a vector direction for the vector.

6. The method of claim 5, wherein a third attribute in the output matrices is associated with a value representing whether an object of interest is associated with that element or not.

7. The method of claim 5 or 6, wherein the first, second and third scalar attributes in the input matrix represent respective primary colours in the image data.

8. The method of any preceding claim, wherein the previous training is directed to identifying objects of interest that are at least approximately rectangular or cuboid in shape.

9. The method of any preceding claim, further comprising outputting the point of each object identified in the image.

10. The method of any preceding claim, further comprising outputting the boundary of each object identified in the image.

11. The method of any preceding claim, wherein the mapping from either pixels or voxels to the finite elements of the mesh is one of a: one-to-one mapping, a many-to-one mapping and a many-to-many mapping.

12. A computer apparatus (500) configured to perform segmentation on an image (10) to find objects (12) of interest in a scene, the computer apparatus comprising:
a memory (515, 520) operable to store a set of either two-dimensional or three-dimensional image data comprising respectively either pixels or voxels representing an image of a scene and loaded with instructions embodying a neural network trained to process images of the type stored in the memory; and
a processor (510) configured to cooperate with the memory so as to be operable to:
load image data of an image from the memory;
subdivide the image data into a mesh of finite elements by mapping either the pixels or voxels onto the finite elements, wherein within the mesh each finite element has at least three neighbouring finite elements with either a common line or a common surface in case of the image data being two-dimensional or three-dimensional respectively;
assign a vector to each finite element, wherein each vector is anchored in its finite element and has a direction, the direction being assigned an initial value that is arbitrary;
apply the neural network to determine a vector direction for at least a subset of the finite elements, wherein the neural network has been previously trained to minimise cost in a loss function where cost is minimised when all vectors associated with an object of interest are pointing to a common point lying within a boundary associated with that object;
identify any objects of interest in the image through analysis of the vector directions; and
output data relating to the objects of interest.

13. A method of training a neural network to segment an image (10) to find objects (12) of interest in a scene, the method comprising:
providing a library of training images, each training image comprising a set of either two-dimensional or three-dimensional image data of respectively either pixels or voxels representing an image of a scene;
subdividing the image data into a mesh of finite elements by mapping either the pixels or voxels onto the finite elements, wherein within the mesh each finite element has at least three neighbouring finite elements with either a common line or a common surface in case of the image data being two-dimensional or three-dimensional respectively;
supplementing each training image with ground-truth data indicating boundaries of any objects of interest in the image and a point within each object of interest, the ground-truth data comprising a vector assigned to each finite element, wherein each vector is anchored in its finite element and is given a direction that points towards the point for that object; and
training the neural network by minimizing a loss function, where cost is minimised when all vectors associated with each ground-truth object in the training image are pointing to the ground-truth point for that object.

14. The method of claim 13, wherein training the neural network involves adjusting weights in the loss function to provide better alignment between the vectors computed by the loss function and the vectors in the ground-truth data.

15. A computer apparatus (500) configured to train a neural network to segment an image (10) to find objects (12) of interest in a scene, the computer apparatus comprising:
a memory (515, 520) in which is stored a library of training images, each training image comprising a set of either two-dimensional or three-dimensional image data of respectively either pixels or voxels representing an image of a scene as well as ground-truth data indicating boundaries of any objects of interest in the image and a point within each object of interest, the ground-truth data comprising a vector assigned to each finite element, wherein each vector is anchored in its finite element and is given a direction that points towards the point for that object; and
a processor (510) configured to cooperate with the memory so as to be operable to:
load a training image from the memory;
subdivide the image data of a training image into a mesh of finite elements by mapping either the pixels or voxels onto the finite elements, wherein within the mesh each finite element has at least three neighbouring finite elements with either a common line or a common surface in case of the image data being two-dimensional or three-dimensional respectively; and
train the neural network by minimizing a loss function, where cost is minimised when all vectors associated with each ground-truth object in the training image are pointing to the ground-truth point for that object.
